# EUROPEAN PATENT SPECIFICATION

(11) **EP 4 325 646 B1**
(45) Date of publication and mention of the grant of the patent: **01.10.2025**
(21) Application number: 22856096.7
(22) Date of filing: 03.08.2022
(51) Int. Cl.: H01M 50/358, H01M 50/30

(54) **BATTERY MODULE WITH REINFORCED SAFETY**
BATTERIEMODUL MIT VERSTÄRKTER SICHERHEIT
MODULE DE BATTERIE À SÉCURITÉ RENFORCÉE

(30) Priority: 12.08.2021 KR 20210106956; 01.08.2022 KR 20220095276
(43) Date of publication of application: 21.02.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); JUNG, Hye-Mi, Daejeon 34122 (KR)
(74) Representative: Goddar, Heinz J.
(86) International application number: PCT/KR2022/011461
(87) International publication number: WO 2023/018097

(56) References cited:
- CN-A- 111 697 182
- KR-A- 20110 042 119
- KR-A- 20150 031 611
- KR-A- 20170 135 469
- KR-A- 20190 036 260
- US-A1- 2010 047 673
- US-A1- 2018 241 017
- US-A1- 2020 152 930
- US-A1- 2021 050 573

## Description

### TECHNICAL FIELD

The present disclosure relates to a battery, and more particularly, to a battery module with reinforced safety, and a battery pack and a vehicle including the battery same.

### BACKGROUND ART

As the demand for portable electronic products such as notebook computers, video cameras and portable telephones is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. In addition, a plurality of battery modules may be connected to form one battery pack.

However, when a plurality of battery modules are included in the battery pack as described above, this structure may be vulnerable to a thermal chain reaction between the battery modules. For example, when an event such as a thermal runaway occurs inside one battery module, propagation of the thermal runaway to other battery modules needs to be suppressed. If the propagation of thermal runaway between battery modules is not suppressed properly, the event occurring in a specific battery module causes a chain reaction of several battery modules, which may cause an explosion or fire or increase the scale.

In particular, when an event such as thermal runaway occurs in any one battery module, gas or flame may be discharged to the outside. At this time, if the emission of gas or flame is not properly controlled, the gas or flame may discharged toward other battery modules, which may cause a thermal chain reaction of others battery modules.

In addition, in the case of a conventional battery module, a path for discharging a venting gas to the outside may be included when the venting gas is generated. At this time, foreign substances such as water may be introduced through the discharge path of the venting gas.

US 2010/047 673 A1 relates to a battery pack including a battery having a risk of releasing a gas under abnormal conditions, a case that accommodates the battery, and an oxygen reducing portion that reduces an amount of oxygen within the case.

US 2021/050 573 A1 a battery module including a cell stack having a plurality of battery cells; a module case configured to accommodate the cell stack; a pair of module covers configured to cover openings at both sides of the module case; and a ventilation unit installed through the module cover. The ventilation unit includes a one-way venting valve disposed at a center of a perforation hole formed through the module cover; a first hole sealing portion attached onto an inner wall of the perforation hole; and a second hole sealing portion attached onto an outer circumference of the one-way venting valve.

### DISCLOSURE

### Technical Problem

The present disclosure is designed to solve the problems of the related art, and therefore the present disclosure is directed to providing a battery module with an improved structure to appropriately control the discharge of gas or flame generated inside the battery module and effectively block the introduction of external foreign substances, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a cell assembly having at least one battery cell; a module case configured to accommodate the cell assembly in an inner space thereof and having a venting hole formed therein to discharge a venting gas generated from the cell assembly; a venting unit located at an outer side of the module case and configured so that the venting gas discharged from the venting hole is introduced therein and discharged to the outside; and a filter unit at least partially located inside the venting unit and configured to filter substances introduced into the venting unit.

Here, the filter unit may contain a moisture absorbing material.

In addition, the filter unit may be configured to generate carbon dioxide.

In addition, the filter unit may be configured so that gas necessarily passes between the venting hole and a discharge hole of the venting unit.

In addition, at least one end of the venting unit may be configured in a bent plate form, and at least a part of an end of the bent portion may be attached to an outer side of the module case.

In addition, the venting unit may include a protrusion formed on an inner surface.

In addition, the protrusion of the venting unit may be configured to be inserted into the filter unit.

In addition, the filter unit may be inserted between the protrusions of the venting unit.

In addition, the filter unit may be arranged in plural along a flow direction of the venting gas in an inner space of the venting unit.

In addition, the module case may have the venting hole formed at both ends of a side surface thereof, and the venting unit may have a discharge hole formed between the venting holes at both ends.

In addition, the venting unit may have an inclined surface on a bottom thereof to have a height lowered in a direction toward the venting hole.

In addition, the filter unit may be configured to be mounted in an inner space of the venting unit in a state where the venting unit is attached to an outer surface of the module case.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to the present disclosure, when gas or flame is generated inside the battery module, the discharge of such gas or flame may be properly controlled.

In particular, according to an embodiment of the present disclosure, gas venting of the battery module may be effectively controlled in response to the occurrence of a thermal runaway event without significantly changing the internal configuration of the battery module.

In addition, according to an embodiment of the present disclosure, when thermal runaway occurs inside the battery module, the discharge of flame or spark to the outside may be blocked.

Therefore, according to an embodiment of the present disclosure, even if an event such as thermal runaway occurs in a specific battery module, propagation of the thermal runaway situation to other battery modules may be effectively suppressed.

In addition, according to an embodiment of the present disclosure, functions such as preventing water inflow and removing moisture may be achieved through a filter unit having a moisture/smoke absorption function installed inside the venting unit, in a normal battery usage environment.

Also, according to another embodiment of the present disclosure, when an event such as thermal runaway occurs, the filter unit sublimes into carbon dioxide or the like, thereby suppressing a flame or fire. Therefore, it is possible to more effectively suppress the occurrence of a chain reaction between battery modules.

Therefore, in the present disclosure, a battery module with improved safety and an application device thereof may be provided. In particular, when the battery module according to the present disclosure is applied to a vehicle, occupant safety may be ensured more effectively.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view schematically showing a battery module according to an embodiment of the present disclosure.
FIG. 2 is an assembled perspective view showing the configuration of FIG. 1.
FIG. 3 is a schematic diagram showing an effect of the battery module according to an embodiment of the present disclosure.
FIG. 4 is a perspective view schematically showing the configuration of a venting unit included in the battery module according to an embodiment of the present disclosure.
FIG. 5 is a cross-sectional view schematically showing the configuration in which the venting unit of FIG. 4 is coupled to a module case.
FIG. 6 is a perspective view schematically showing the configuration of a venting unit according to another embodiment of the present disclosure.
FIG. 7 is a diagram schematically showing a flow path of a venting gas for the venting unit of FIG. 6.
FIG. 8 is a perspective view schematically showing the configuration of a filter unit according to another embodiment of the present disclosure.
FIG. 9 is a perspective view schematically showing the configuration of a venting unit according to still another embodiment of the present disclosure.
FIG. 10 is an enlarged view schematically showing a partial configuration of a venting unit according to still another embodiment of the present disclosure.
FIG. 11 is an exploded perspective view schematically showing the configuration of a venting unit and a filter unit according to still another embodiment of the present disclosure.
FIG. 12 is a perspective view schematically showing a partial configuration of a battery module according to still another embodiment of the present disclosure.
FIG. 13 is a cross-sectional view, taken along line B3-B3' of FIG. 12.
FIG. 14 is a perspective view schematically showing the configuration of a battery module according to still another embodiment of the present disclosure.
FIG. 15 is a perspective view schematically showing the configuration of a battery module according to still another embodiment of the present disclosure.
FIG. 16 is a diagram showing a battery pack according to another embodiment of the present disclosure, as viewed from the top.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

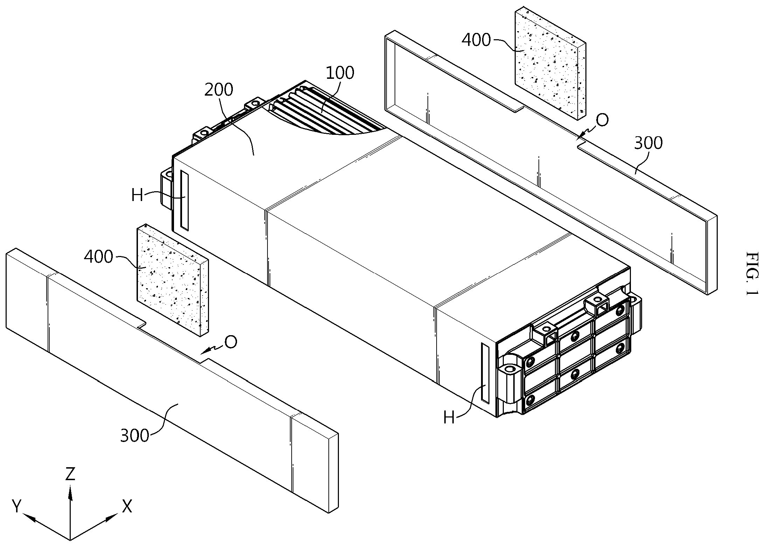

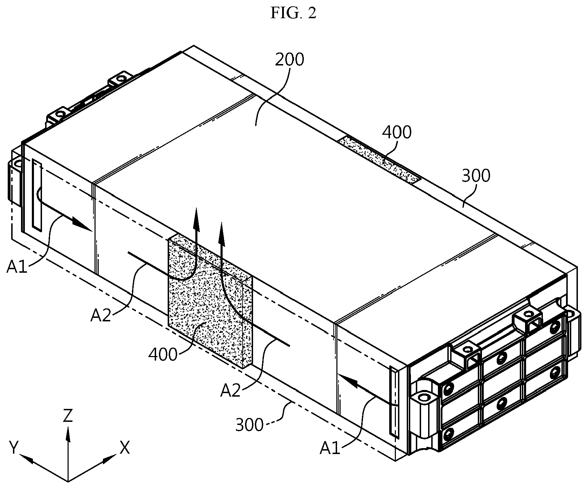

FIG. 1 is an exploded perspective view schematically showing a battery module according to an embodiment of the present disclosure, and FIG. 2 is an assembled perspective view showing the configuration of FIG. 1. However, in FIG. 1, for convenience of description, the module case 200 is shown in a partially cut-away form.

Referring to FIGS. 1 and 2, the battery module according to the present disclosure includes a cell assembly 100, a module case 200, a venting unit 300 and a filter unit 400.

The cell assembly 100 may include at least one battery cell. Here, each battery cell may refer to a secondary battery. The secondary battery may include an electrode assembly, an electrolyte and a battery case. In particular, the battery cell provided in the cell assembly 100 may be a pouch-type secondary battery. However, other types of secondary batteries, such as a cylindrical battery or a rectangular battery, may also be employed in the cell assembly 100 of the present disclosure.

A plurality of secondary batteries may form the cell assembly 100 in a stacked form. For example, the plurality of secondary batteries may be stacked so as to be arranged in a horizontal direction (X-axis direction in the drawing) while being erect in an upper and lower direction (Z-axis direction in the drawing), respectively. Each battery cell may include electrode leads, and the electrode leads may be located at both ends or at one end of each battery cell. A secondary battery in which the electrode leads protrude in both directions may be called a bidirectional cell, and a secondary battery in which the electrode leads protrude in one direction may be called a unidirectional cell. The present disclosure is not limited by the specific type or form of these secondary batteries, and various types of secondary batteries known at the time of filing of this application may be employed in the cell assembly 100 of the present disclosure.

The module case 200 may have an empty space formed therein and be configured to accommodate the cell assembly 100 in the inner space. For example, the module case 200 may be configured to include an upper plate, a lower plate, a left plate, a right plate, a front plate and a rear plate to define the inner space. Here, at least two or more of the upper plate, the lower plate, the left plate, the right plate, the front plate, and the rear plate may be configured in an integrated form. For example, the upper plate, the lower plate, the left plate, and the right plate may be integrated with each other. At this time, the integrated case has a tubular shape and may be referred to as a mono frame. In this case, the module case 200 may include an end cover (a front plate, a rear plate) respectively coupled to the front and rear open ends of the mono frame. As another example, in the module case 200, the left plate, the right plate, and the lower plate may be integrated with each other. At this time, the integrated case may be referred to as a U-frame due to its shape. Alternatively, the module case 200 may include a box-shaped lower case with an open top and an upper case (an upper plate) covering the top open portion of the lower case. In addition, the module case 200 may be configured in various other forms.

The module case 200 may have a venting hole H, as shown in FIG. 1 or the like. For example, the venting hole H may be formed in the left plate and the right plate of the module case 200, respectively. The venting hole H may be configured such that, when a venting gas is generated and ejected from the cell assembly 100 accommodated in the inner space of the module case 200, the generated venting gas may be discharged to the outer space of the module case 200.

For example, when the module case 200 is configured in a form having a mono frame and an end cover, the venting hole H may be formed in the mono frame and/or the end cover. Alternatively, when the module case 200 is configured in a form having a lower case and an upper case, the venting hole H may be formed in the lower case and/or the upper case.

The module case 200 may be configured in a sealed form except for the venting hole H. In addition, the venting hole H may be formed in a completely open form so as to penetrate the module case 200 in an inner and outer direction. However, the venting hole H may not be completely opened, but may be configured to be closed in a normal state and be opened according to the change in pressure or temperature.

The venting unit 300 may be provided to at least one side, particularly to an outer side, of the module case 200. Moreover, the venting unit 300 may be provided to the outer side of the module case 200. For example, the venting hole H may be formed in the left surface of the module case 200. In addition, although not shown in the drawings, the venting hole H may also be formed in the right surface of the module case 200. In this case, the venting unit 300 may be attached to the outer portion of the left and right surfaces of the module case 200, respectively.

The venting unit 300 may be attached and fixed to the surface of the module case 200 using various fastening methods. In particular, the venting unit 300 may be attached and fixed to a portion of the module case 200 where the venting hole H is formed by welding or the like.

The venting unit 300 may be configured to define an empty space therein, and through the defined space, the venting gas discharged from the venting hole H flows. That is, the venting unit 300 may be configured such that the venting gas discharged from the venting hole H is introduced into the inner space. In addition, the venting unit 300 may be configured such that the venting gas flowing through the inner space is discharged to the outside through a discharge hole as indicated by O in FIG. 1. Here, the inner space of the venting unit 300 may be referred to as a venting channel in that it is a space for guiding the venting gas. That is, in the venting unit 300, the venting channel may be formed so that the venting gas introduced into the inner space through the venting hole H flows. In addition, the venting gas flowing through the venting channel may be discharged to the outside through the discharge hole O.

At least a part of the filter unit 400 may be located inside the venting unit 300. That is, an inner space may be formed in the venting unit 300 to function as a venting channel, and at least a part of the filter unit 400 may exist in this venting channel. In particular, the filter unit 400, as a whole, may be configured to be inserted into the inner space of the venting unit 300, namely the venting channel.

The filter unit 400 may be configured to filter substances introduced into the venting unit 300. The filter unit 400 has a plurality of pores or the like to pass material of a specific state or a specific component, and filter materials of another specific state or specific component to block movement thereof.

Moreover, the filter unit 400 may be located in a path through which the venting gas flows, namely in a venting channel, and may be configured to filter the venting gas or other materials. For example, the filter unit 400 may be configured with a structure or material for filtering a substance introduced into the venting unit 300 through the venting hole H and discharged to the outside through the discharge hole O. In addition, the filter unit 400 may be configured with a structure or material for filtering substances introduced into the inner space of the venting unit 300 through the discharge hole O.

In particular, when a venting gas is generated inside the module case 200 due to an event such as thermal runaway or the like in the cell assembly 100, the venting gas may be introduced and pass into the inner space of the venting unit 300 through the venting hole H of the module case 200, as indicated by arrow A1. At this time, the filter unit 400 provided in the inner space of the venting unit 300 may filter the venting gas. That is, as indicated by arrow A2 in FIG. 2, the venting gas may be filtered through the filter unit 400 and then discharged to the outside of the venting unit 300 through the discharge hole O.

Moreover, high-temperature particles such as active material particles or electrolyte may be included in the venting gas in the form of a spark. In addition, when the venting gas is discharged, flame may also be discharged together. At this time, the filter unit 400 may be configured to filter such sparks and/or flames.

Therefore, according to this embodiment of the present disclosure, during thermal runaway, external emission of materials discharged to the outside through the venting unit 300, for example the venting gas or materials included therein, may be blocked or suppressed. In particular, according to the embodiment of the present disclosure, external emission of flame and/or spark may be blocked or suppressed.

Moreover, in the present disclosure, the venting unit 300 may guide a moving path of the venting gas or the like in a bent form. At this time, since the moving path of the spark or flame discharged together with the venting gas has a strong straightness, the bent venting path formed by the venting unit 300 may block or suppress external emission of the spark or flame. Moreover, since the filter unit 400 blocks external emission of such sparks or flames once again, external emission of such sparks or flames may be more reliably suppressed or blocked.

Therefore, according to this embodiment of the present disclosure, it is possible to prevent a fire from occurring or spreading outside the battery module in which an abnormal situation such as thermal runaway occurs, by lowering the possibility that an ignition source leaks out of the battery module. Therefore, a thermal chain reaction between battery modules may be suppressed, thereby improving fire suppression or prevention performance.

In addition, the filter unit 400 may be made of a material capable of absorbing smoke (smoke absorbing material). That is, the filter unit 400 may be provided to absorb at least some of components included in the venting gas. For example, the filter unit 400 may be configured with a form or material for absorbing toxic gases that may adversely affect the human body, among components included in the venting gas. In this case, when the venting gas is discharged from the battery module, it is possible to prevent or reduce fatal damage to users such as vehicle drivers due to the venting gas.

The filter unit 400 may include a material capable of absorbing moisture, namely a material having a moisture absorbing function. For example, the filter unit 400 may include various moisture absorbing agents or dehumidifying agents known at the time of filing of this application. Moreover, the filter unit 400 may include a moisture absorbing material in a solid state. Here, the solid state may be a state before absorbing moisture, and the moisture absorbing material in a solid state may be a material that maintains a solid state in spite of moisture absorption or depending on surrounding conditions such as heat, or may be a material that is converted to another state such as liquid or gas.

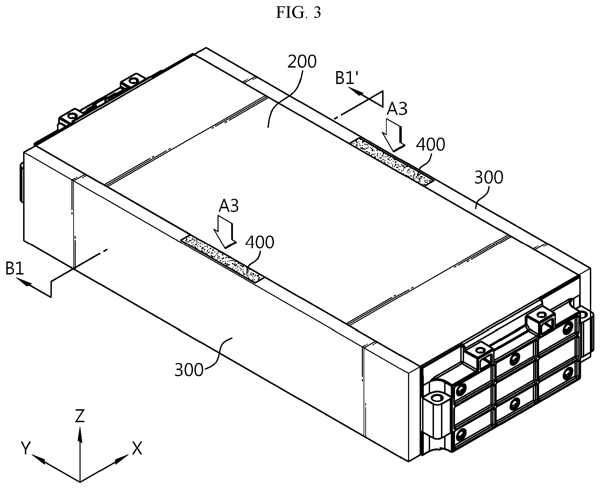

According to this embodiment of the present disclosure, introduction of foreign substances such as water into the battery module through the venting unit 300 may be more effectively blocked. This will be described in more detail with reference to FIG. 3.

FIG. 3 is a schematic diagram showing an effect of the battery module according to an embodiment of the present disclosure.

Referring to FIG. 3, as indicated by arrow A3, even if water or moisture is to penetrate into the inner space of the venting unit 300 through the discharge hole O, the filter unit 400 provided in the discharge hole O may block penetration of the water or moisture. Moreover, a battery module mounted in a vehicle or ESS may be used outdoors, and in this case, the battery module may be placed in an environment where water or moisture may penetrate, such as the cases where it rains or snows or water is splashed. In this situation, the battery module according to the present disclosure may lower the penetration probability of water or moisture through the moisture absorbing function of the filter unit 400.

Moreover, according to the embodiment of the present disclosure, even if water or moisture exists in the inner space of the venting unit 300, the water or moisture may be absorbed by the filter unit 400. Therefore, according to this embodiment, it is possible to prevent water or moisture from being introduced into the module case 200, particularly into the cell assembly 100.

According to this configuration of the present disclosure, a function of preventing water from being introduced into the module case 200 through the venting unit 300 or removing moisture may be secured in a normal battery use environment. Accordingly, electrical safety of the battery module according to the present disclosure may be further improved.

Also, the filter unit 400 may be configured to generate carbon dioxide. In particular, the filter unit 400 may include a material that generates carbon dioxide under specific conditions. For example, the filter unit 400 may be provided with, or made of, a material that generates carbon dioxide through a chemical reaction or a change in state such as sublimation at room temperature or in an environment above a certain temperature. Moreover, the filter unit 400 may include a material capable of generating carbon dioxide (CO₂) through a combustion reaction such as heat or flame. As such, carbon dioxide generated by the filter unit 400 may exist around the venting unit 300 or may be located in the inner space of the venting unit 300 as indicated by A3.

This carbon dioxide may suppress or extinguish flames as an extinguishing agent. Therefore, according to this embodiment of the present disclosure, when an event such as thermal runaway occurs, carbon dioxide may actively cope with the venting gas or flame. Moreover, sparks or flames may be introduced into the inner space of the venting unit 300, and the carbon dioxide generated by the filter unit 400 may extinguishes the same, thereby suppressing external emissions of such sparks or flames more effectively. In addition, during the process in which the filter unit 400 causes a combustion reaction by the venting gas or flame, the temperature of the high-temperature venting gas or the active material particles may be lowered by absorbing heat from the venting gas.

Also, in this embodiment, the generated carbon dioxide may be introduced into the inner space of the module case 200. In this case, suppression or diffusion suppression performance against a fire inside the module case 200 may also be secured.

Therefore, according to this embodiment of the present disclosure, the propagation of thermal runaway to neighboring battery modules due to the occurrence of a thermal runaway event in a specific battery module may be more effectively prevented. In addition, according to the embodiment, it is possible to actively cope with a fire in a battery module in which an event occurs through extinguishing.

In addition, the filter unit 400 may include a material that generates water or vapor in a specific situation. Moreover, the filter unit 400 may include a material that generates carbon dioxide and water by a thermal decomposition reaction.

In this case, the water or vapor generated by the filter unit 400 acts as a fire extinguishing material, so that flame or spark emission suppression effects or temperature lowering effects of the venting gas or the like may be further improved.

For example, the filter unit 400 may include naphthalene. In particular, the naphthalene may stably secure moisture/smoke absorption performance. Therefore, in this case, it is possible to more reliably block the introduction of water or moisture into the battery module. Therefore, according to this embodiment, the introduction of water or the like into the battery module is prevented during normal use of the battery module, thereby improving electrical safety and preventing corrosion of internal components.

Also, in this embodiment, the naphthalene included in the filter unit 400 may generate carbon dioxide and water through a combustion reaction. In particular, when an event such as thermal runaway intensifies inside the module case 200 so that a flame or the like is generated and introduced into the venting unit 300, the flame or the like may cause a combustion reaction with respect to naphthalene. In this case, naphthalene may react with oxygen to produce carbon dioxide and water.

As another example, the filter unit 400 may include potassium hydrogen carbonate or sodium hydrogen carbonate. Typically, potassium hydrogen carbonate may generate carbon dioxide and water (vapor) through the following thermal decomposition reaction.

2KHCO₃ → K₂CO₃ + H₂O + CO₂ - Q

That is, when potassium hydrogen carbonate is included in the filter unit 400, potassium hydrogen carbonate may absorb heat (Q) to produce vapor (H₂O) and carbon dioxide (CO₂) together with K₂CO₃.

According to this embodiment of the present disclosure, it is possible to more quickly and reliably suppress sparks or fires generated inside the battery module by carbon dioxide and/or water generated by the filter unit 400 during thermal runaway. In addition, in this case, the temperature of the venting gas or high-temperature material may be lowered by water or the like. Moreover, vapor or the like may have an effect of suppressing external emission of fire or particles by interfering with linear movement of fire or particles.

The filter unit 400 may be made of only materials such as naphthalene or potassium bicarbonate, or may further include other materials or components together with these materials. For example, the filter unit 400 may be configured in a compressed form of naphthalene or potassium hydrogen carbonate powder. Alternatively, the filter unit 400 may be configured such that the carbon dioxide and/or vapor generating material is supported by a separate support unit. For example, the filter unit 400 may be configured in a form in which potassium bicarbonate or naphthalene is supported on a mesh-shaped support unit made of metal or polymer.

The filter unit 400 may be configured in a plate shape. For example, as shown in FIG. 1 and the like, the filter unit 400 may be configured in the form of a rectangular plate. At this time, the filter unit 400 may be configured so that the venting gas flows in and out through two wide surfaces, namely narrow side surfaces, rather than a front or rear surface. In this case, even if the weight of the filter unit 400 is not greatly increased, the area through which the venting gas passes through the filter unit 400 may be increased. Therefore, various performances by the filter unit 400, such as flame blocking performance or moisture absorption performance, may be secured more efficiently.

The filter unit 400 may be provided at a position close to the discharge hole O of the venting unit 300. In particular, the filter unit 400 may be located at the discharge hole O of the venting unit 300. In this case, a portion of the filter unit 400, for example an upper corner portion of the filter unit 400, may be exposed to the outside through the discharge hole O.

According to this configuration, since the introduction of water or the like is blocked from the discharge hole O, it is possible to fundamentally prevent water or the like from being introduced into the venting unit 300. Also, according to this embodiment, the filter unit 400 may be positioned as far as possible away from the venting hole H. Therefore, while the venting gas or flame introduced through the venting hole H is passing through the inner space of the venting unit 300, its temperature may be reduced as much as possible or its movement may be suppressed as much as possible. Therefore, it is possible to prevent the filter unit 400 from being damaged or melted by the venting gas or flame, or to reduce the amount of filtering so that the filtering effect may be maintained for a long time.

In addition, the filter unit 400 may be configured such that gas essentially pass between the venting hole H and the discharge hole O. That is, the filter unit 400 may be configured to entirely block and close a cross-sectional area orthogonal to the flow path when a substance such as the venting gas flows in the inner space of the venting unit 300. For example, the filter unit 400 may be configured to completely close the discharge hole O of the venting unit 300. In this case, materials located inside or outside the filter unit 400 may necessarily pass through the filter unit 400 in the process of being discharged to the outside of the venting unit 300 or introduced into the venting unit 300.

For example, when the venting gas is introduced into the venting unit 300 from the venting hole H and is discharged to the outside through the discharge hole O, the filter unit 400 may be configured so that all venting gas must pass through the filter unit 400. As another example, water or the like existing outside the venting unit 300 must pass through the filter unit 400 in the process of being introduced into the inner space of the venting unit 300 through the discharge hole O and moving toward the venting hole H. Moreover, as shown in FIGS. 1 to 3, in an embodiment in which the filter unit 400 is disposed at the discharge hole O side of the venting unit 300, the filter unit 400 may be configured to cover the entire discharge hole O of the venting unit 300. In this case, in order for the venting gas to be discharged to the outside of the venting unit 300 or for external moisture or the like to be introduced into the venting unit 300, they must pass through the filter unit 400.

In other words, without passing through the filter unit 400, the fluid inside the venting unit 300 cannot be discharged to the outside of the venting unit 300, and the fluid outside the venting unit 300 cannot be introduced into the module case 200 through the venting hole H.

According to this embodiment, the filtering or blocking effect by the filter unit 400 may be ensured more reliably. Also, according to this embodiment, the effect of generating an extinguishing substance such as carbon dioxide and/or water by the filter unit 400 or the effect of lowering the temperature resulting therefrom may be further improved.

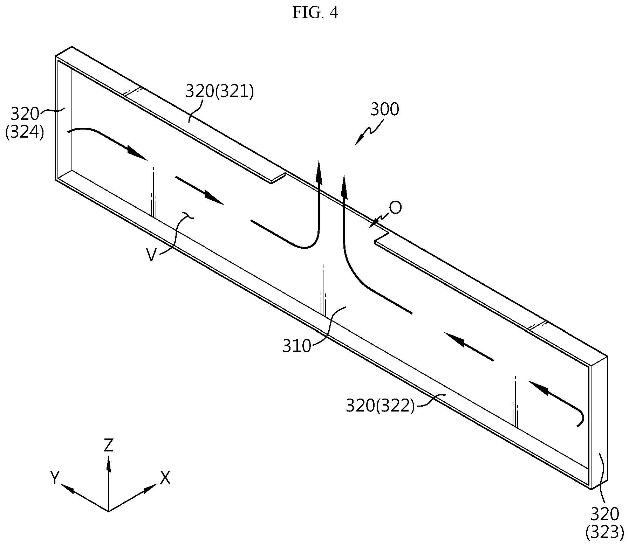

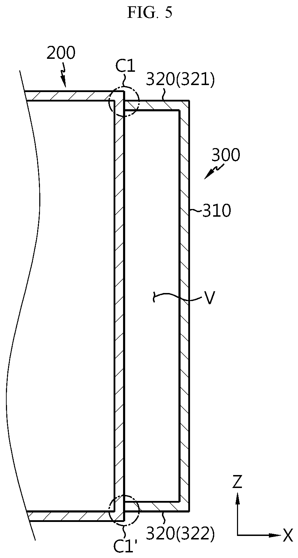

At least one end of the venting unit 300 may have a bent plate shape. In addition, at least a part of an end of the bent portion of the venting unit 300 may be attached to the outer side of the module case 200. This will be described in more detail with reference to FIGS. 4 and 5.

FIG. 4 is a perspective view schematically showing the configuration of a venting unit 300 included in the battery module according to an embodiment of the present disclosure. Also, FIG. 5 is a cross-sectional view schematically showing the configuration in which the venting unit 300 of FIG. 4 is coupled to the module case 200. For example, FIG. 5 may be regarded as a partial configuration of the cross section, taken along the line B1-B1' of FIG. 3. In particular, FIG. 5 shows a cross section of the configuration in which the venting unit 300 is mounted at a right side of the module case 200.

Referring to FIGS. 4 and 5, the venting unit 300 may include a body portion 310 and a bent portion 320. The body portion 310 may be configured in a plate shape, and the bent portion 320 may be formed at a corner of the body portion 310. In particular, the bent portion 320 may be integrated with the body portion 310. Accordingly, the bent portion 320 may be formed by bending the corner of the body portion 310 inward. Here, the inner direction may be a direction toward the module case 200. In this specification, unless otherwise specified, for each component, the inner direction may mean a direction toward the center of the battery module, and the outer direction may mean a direction toward the periphery of the battery module.

In the venting unit 300, the body portion 310 may be configured in the form of a rectangular plate, and the bent portion 320 may be formed at four corners of the body portion 310. For example, as shown in FIGS. 4 and 5, the bent portion 320 may be formed at a top edge, a bottom edge, a front edge, and a rear edge of the body portion 310, respectively. In addition, due to this bent shape, at least a part of the inner space forming the venting channel may be defined. However, a part of at least one corner of the body portion 310, for example a top corner, may be formed in a cut or torn form to function as a discharge hole O.

In this embodiment, the venting channel may be formed by a space defined by the body portion 310 and the bent portion 320 of the venting unit 300. That is, seeing the configuration shown in FIGS. 4 and 5, the right surface of the venting channel as indicated by V may be defined by the body portion 310, and the upper and lower portions may be defined by the top bent portion 321 and the bottom bent portion 322, respectively. In addition, the front and rear sides of the venting channel V may be defined by the front bent portion 323 and the rear bent portion 324 of the venting unit 300.

Meanwhile, one side of the venting channel V, for example the left side, may be configured in a completely open form, and the module case 200 may be located at the left side. In particular, outer ends of the top bent portion 321 and the bottom bent portion 322 of the venting unit 300 may be attached to the outer surface of the module case 200, as indicated by C1 and C1' in FIG. 5. Also, ends of the front bent portion 320 and the rear bent portion 320 of the venting unit 300 may be attached to the outer surface of the module case 200. Here, the attachment portion between each bent portion 320 of the venting unit 300 and the module case 200 may be strongly coupled, fixed, and sealed so that the venting gas does not leak out. For example, an end of each bent portion 320 of the venting unit 300 may be laser-welded and sealed to the outer surface of the module case 200. In addition, the venting unit 300 and the module case 200 may be coupled to each other in various other ways.

Here, a part of the bent edge portions of the body portion 310 may not be attached to the module case 200. In this case, a part of the body portion 310 that is not attached to the module case 200 may be the discharge hole O, which is a portion through which the venting gas is discharged to the outside of the venting unit 300.

In this embodiment, it may be regarded that the venting channel V is formed by defining a space by the outer surfaces of the venting unit 300 and the module case 200. In addition, the venting gas discharged from the venting hole H may flow inside the venting channel V as indicated by an arrow in FIG. 4 and then be discharged to the outside of the venting unit 300 through the discharge hole O.

According to this configuration of the present disclosure, the configuration for guiding the venting gas in the battery module may be provided with a simple structure and an easy assembly method. In particular, in this case, the venting unit 300 may be manufactured very easily. In addition, according to this embodiment of the present disclosure, only the venting hole H needs to be formed in the module case 200, and most configurations of the conventional battery module may be utilized as they are. Accordingly, there is no need to greatly change or complicate the external shape of the module case 200 or its internal structural design or manufacturing method. Therefore, a battery module that is easy to manufacture while greatly improving safety may be implemented.

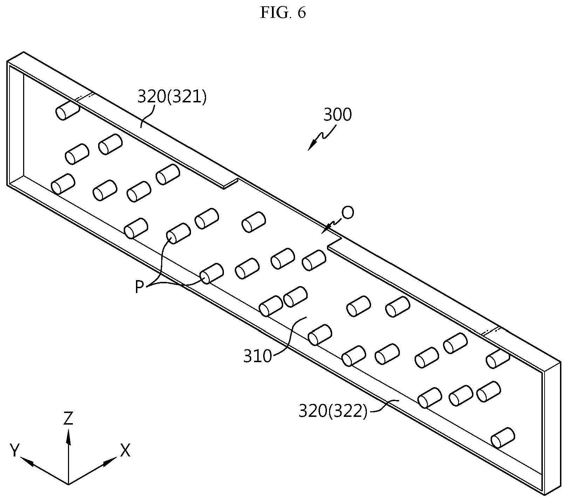

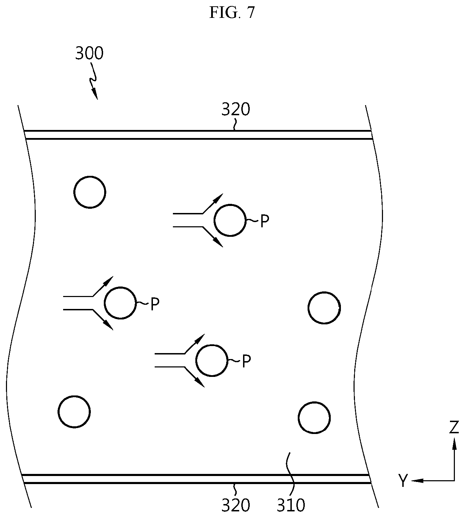

FIG. 6 is a perspective view schematically showing the configuration of a venting unit 300 according to another embodiment of the present disclosure, and FIG. 7 is a diagram schematically showing a flow path of a venting gas for the venting unit 300 of FIG. 6. Meanwhile, for various embodiments included in this specification, including this embodiment, features identically or similarly to the former embodiment will not be described in detail, and features different therefrom will be described in detail.

Referring to FIG. 6, the venting unit 300 may have a protrusion P formed on the inner surface. In particular, the body portion 310 of the venting unit 300 facing the outer surface of the module case 200 may have a protrusion P protruding convexly toward the outer surface of the module case 200. For example, the venting unit 300 shown in FIG. 6 may be mounted to the right surface of the module case 200, and, a protrusion P protruding in the left direction where the venting channel exists may be provided on the left surface of the venting unit 300. In particular, a plurality of protrusions P may be provided on the inner surface of the venting unit 300.

In this embodiment, when venting gas, flame, spark, or the like moves in the inner space of the venting unit 300, it may collide with the protrusion P. For example, referring to FIG. 7, the venting gas may move from the venting hole H toward the discharge hole O in the -Y-axis direction. At this time, the flame, spark, active material particles, or the like along with the venting gas may collide with the protrusion P and change the direction, as indicated by the arrow in FIG. 7.

In this case, the venting gas may move smoothly while changing the direction. However, the movement of flames or sparks with strong linearity during movement may be prevented. Therefore, external emission of flame or spark from the inside of the venting unit 300 to the outside may be suppressed or reduced.

Moreover, the venting unit 300 may be configured so that the venting gas collides with at least one protrusion P while flowing. That is, the venting unit 300 may have a protrusion P so that the flow direction of the venting gas in the inner space is not formed in a straight line and is bent at least once. For example, inside the venting unit 300, a plurality of protrusions P are disposed along the flow direction of the venting unit 300 (Y-axis direction in FIG. 7), and at least a part of the plurality of protrusions P may be located at different positions in a vertical direction (Z-axis direction in FIG. 7) orthogonal to the flow direction of the venting unit 300.

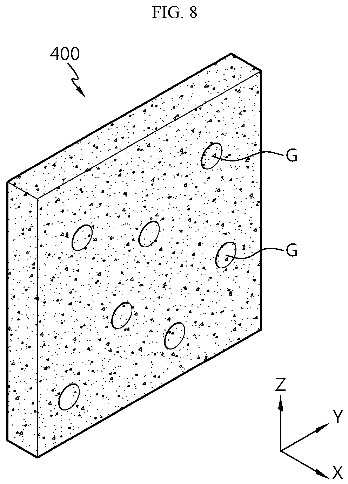

In this embodiment, the filter unit 400 may be configured such that the protrusion P of the venting unit 300 is inserted therein. This will be described in more detail with reference to FIG. 8 further.

FIG. 8 is a perspective view schematically showing the configuration of a filter unit 400 according to another embodiment of the present disclosure. For example, FIG. 8 may be regarded as showing an example of the filter unit 400 mounted to the venting unit 300 of FIG. 6.

Referring to FIG. 8, as indicated by G, the filter unit 400 may include an insert portion formed concave inward. The insert portion G may have a groove shape or a hole shape. In particular, the insert portion G may have a shape and position corresponding to the protrusion P of the venting unit 300 as shown in FIGS. 6 and 7. For example, as shown in FIG. 8, a plurality of insert portions G may be formed on an outer surface of the filter unit 400 facing the body portion 310 of the venting unit 300. In addition, the position and shape of each insert portion G may be configured such that the protrusion P provided to the venting unit 300 may be inserted. Therefore, when the filter unit 400 is mounted in the inner space of the venting unit 300, for example at the discharge hole O, the protrusion P of the venting unit 300 may be fitted into the insert portion G of the filter unit 400.

According to this embodiment of the present disclosure, the coupling force between the filter unit 400 and the venting unit 300 may be strengthened. In particular, when the venting gas is discharged to the outside through the venting unit 300, strong pressure may be applied to the filter unit 400. However, according to this embodiment, the filter unit 400 may stably maintain its position in the inner space of the venting unit 300 without escaping to the outside even when the venting gas is discharged. In addition, when the battery module is mounted in a vehicle, the battery module may be exposed to frequent vibration or impact. At this time, if the filter unit 400 stably maintains its position inside the venting unit 300 as in this embodiment, the function of the filter unit 400 may be properly exercised even in the event of vibration or impact.

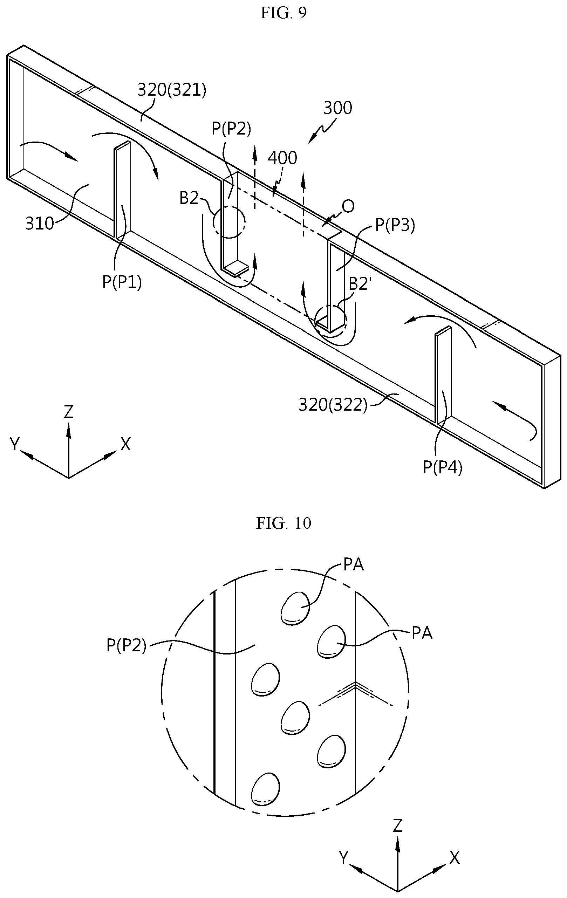

FIG. 9 is a perspective view schematically showing the configuration of a venting unit 300 according to still another embodiment of the present disclosure.

Referring to FIG. 9, the protrusion P of the venting unit 300 may be formed in a barrier form. That is, in the embodiment of FIG. 6, the protrusion P is configured in a pin or rod form, but in the embodiment of FIG. 9, the protrusion P may be configured in a barrier form. In this case, the protrusion P of a barrier form may be configured in the form of a partition that partitions the inner space of the venting unit 300, namely the venting channel. However, the protrusion P may be configured to be partially opened without completely separating the partitioned spaces, so that gas may flow through the open portion. In this case, the venting gas flows along the surface of the protrusion P of a barrier form and may flow between different spaces through the open portion.

In particular, a plurality of protrusions P of a barrier form may be disposed on a path from the venting hole H of the module case 200 to the discharge hole O of the venting unit 300. For example, seeing the embodiment shown in FIG. 9, one venting unit 300 is provided with a total of four protrusions P1 to P4. At this time, it may be regarded that two protrusions P1, P2 are located at the rear side (+Y direction side) based on the discharge hole O of the venting unit 300, and the other two protrusions P3, P4 are located at the front side (-Y direction side) based on the discharge hole O of the venting unit 300.

In this embodiment, the venting gas introduced through the venting hole H of the module case 200 may flow as indicated by arrows by the protrusion P of a barrier form.

Moreover, as shown in FIG. 9, the venting unit 300 may be configured such that a path between a portion of the module case 200 where the venting hole H is located and the discharge hole O is bent at least once. In particular, the protrusions P of a barrier form may be configured such that protrusions P having an open portion at the upper part and protrusions P having an open portion at the lower part are alternately disposed in the flow direction of the venting channel. For example, seeing two protrusions P1, P2 located at the rear side in the embodiment of FIG. 9, one protrusion P1 may be configured to extend upward along the inner surface of the body portion 310 from the bottom bent portion 322, so that its upper end is opened without contacting the top bent portion 321. In addition, the other protrusion P2 may be configured to extend downward from the top bent portion 321 along the inner surface of the body portion 310, so that its lower end is opened without contacting the bottom bent portion 322. That is, the plurality of protrusions P may be formed in a zigzag shape.

According to this embodiment, the venting gas introduced into the venting hole H side may change its direction twice by approximately 90 degrees to 180 degrees, as indicated by arrows, by two protrusions P1, P2. Accordingly, the movement of flames or sparks moving toward the discharge hole O together with the venting gas may be restricted or suppressed due to a plurality of direction changes. In addition, according to this embodiment, with respect to the limited space of the venting unit 300, it is possible to expand the venting path to the maximum. Therefore, the leakage of flame or spark into the discharge hole O is prevented or reduced, and the temperature of the venting gas may be lowered.

In addition, the filter unit 400 may be configured to be inserted between the protrusions of the venting unit 300.

In particular, referring to FIG. 9, the filter unit 400 positioned inside the venting unit 300 is transparently shown with a dotted line. At this time, the filter unit 400 may be disposed in the inner space of the venting unit 300 to be interposed between two protrusions P2, P3 located at both sides based on the discharge hole O. In particular, the filter unit 400 may be fitted between the plurality of protrusions P.

According to this embodiment of the present disclosure, the coupling force between the filter unit 400 and the venting unit 300 may be improved. Therefore, the filter unit 400 may stably maintain its position despite the discharge pressure of the venting gas or external vibration or shock. In addition, according to this embodiment, since the configuration in which the filter unit 400 is mounted inside the venting unit 300 may be easily achieved, the battery module may be assembled more easily. Also, according to this embodiment, a separate shape transformation or configuration may not be provided for the filter unit 400. Therefore, the performance of the filter unit 400 may be maintained at a certain level or more, or mechanical strength may be stably secured.

Moreover, the embodiment in which the filter unit 400 is fitted between the protrusions P may be more easily implemented when the protrusions P are configured in a barrier form, as shown in FIG. 9 above. In particular, in this case, by ensuring a wide contact area between the protrusions P and the filter unit 400, the coupling force between the protrusions P and the filter unit 400 may be maintained more stably.

FIG. 10 is an enlarged view schematically showing a partial configuration of a venting unit 300 according to still another embodiment of the present disclosure. For example, FIG. 10 may be an enlarged view of a portion B2 in the venting unit 300 of FIG. 9.

Referring to FIG. 10, a projection may be formed on the protrusion P of the venting unit 300, as indicated by PA. In particular, referring to FIG. 10 along with FIG. 9, the filter unit 400 may be inserted between at least two protrusions P, and the projection PA may be formed on the surface of the protrusion P in surface contact with the filter unit 400. For example, as shown in FIG. 10, the projection PA having a convex shape toward the filter unit 400 may be provided on one side surface (front surface) of the protrusion P2. Moreover, a plurality of projection PA may be provided on one surface of the protrusion P. In this case, protrusion P may be configured in an embossing form due to the projection PA.

According to this configuration of the present disclosure, the coupling between the filter unit 400 and the protrusion P may be further improved due to the pressing force or frictional force of the projection PA on the filter unit 400. Therefore, the filter unit 400 may be more stably positioned inside the venting unit 300 even in the event of ejection pressure of the venting gas or vibration or shock.

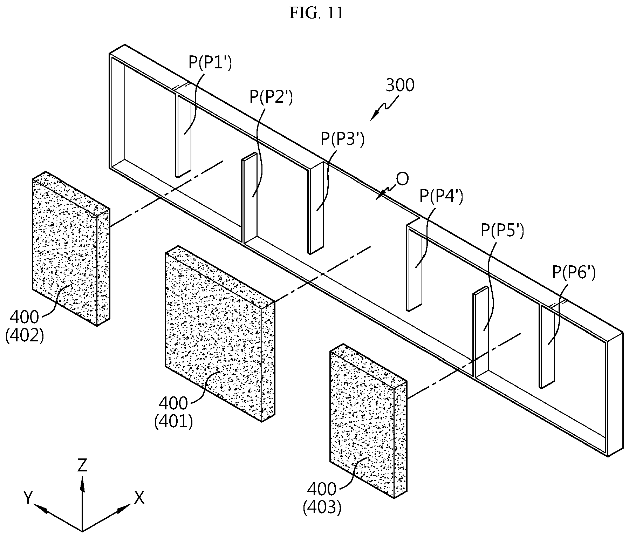

FIG. 11 is an exploded perspective view schematically showing the configuration of a venting unit 300 and a filter unit 400 according to still another embodiment of the present disclosure.

Referring to FIG. 11, a plurality of filter units 400 may be disposed in the inner space of the venting unit 300 along a flow direction of the venting gas. More specifically, in the embodiment of FIG. 11, three filter units 400, namely a first filter 401, a second filter 402 and a third filter 403, may be included in one venting unit 300. Here, the first filter 401 may be interposed between the third protrusion P3' and the fourth protrusion P4', the second filter 402 may be interposed between the first protrusion P1' and the second protrusion P2', and the third filter 403 may be interposed between the fifth protrusion P5' and the sixth protrusion P6'.

At this time, at least two of the three filters 401 to 403 may be configured so that the material flowing inside the venting unit 300 must pass through. For example, the venting gas introduced into the venting unit 300 through the venting hole H located at the rear side may pass through the first filter 401 and the second filter 402 sequentially and then be discharged through the discharge hole O. In addition, the venting gas introduced into the venting unit 300 through the venting hole H located at the front side may pass through the third filter 403 and the second filter 402 sequentially and then be discharged through the discharge hole O. In addition, water or moisture entering the venting unit 300 through the discharge hole O must pass through two filters to reach the venting hole H.

According to this embodiment of the present disclosure, by the plurality of filter units 400 sequentially arranged along the flow direction of the gas in the venting path, blocking performance against flames or sparks, moisture or smoke absorption performance, or the like may be further improved. Also, in this case, even if some filter units 400 have deteriorated performance or are damaged, filter performance may be secured at a certain level or above by other filter units 400. Moreover, in an embodiment in which carbon dioxide or vapor is generated in the filter unit 400, the amount of carbon dioxide or vapor generated through the plurality of filter units 400 may be increased to further enhance the fire extinguishing effect.

Meanwhile, in this embodiment, the plurality of filter units 400 may have different shapes or types. For example, the first filter 401 and the second filter 402 may have different sizes. Alternatively, the first filter 401 and the second filter 402 may include different materials or components. In this case, various performances may be secured through various filters.

In particular, in this embodiment, the filter unit 400 close to the discharge hole O like the second filter 402 may include a material with excellent moisture absorption performance, and the filter unit 400 close to the venting hole H of the module case 200 like the first filter 401 or the third filter 403 may include a material with excellent flame suppression performance or fire extinguishing performance. In this case, the effect of blocking water and suppressing flame emission by the filter unit 400 may be further improved.

The module case 200 may have venting holes H formed at both ends of one side surface. In this case, the venting unit 300 may have a discharge hole formed between the venting holes H at both ends. For example, seeing the embodiment of FIG. 1, two venting holes H may be formed in the left surface of the module case 200. In addition, the two venting holes H may be spaced apart in the front and rear direction in the left surface of the module case 200 and formed at a front end (end at the -Y-axis direction side) and a rear end (end at the +Y-axis direction side), respectively. At this time, in the venting unit 300 mounted to the left surface of the module case 200, the discharge hole O may be located at the center in the front and rear direction (Y-axis direction).

In addition, the venting hole may be formed at both ends in the front and rear direction in another surface of the module case 200, for example in the right surface. Also, in the venting unit 300 attached to the right surface of the module case 200, the discharge hole O may be located at the center in the front and rear direction.

According to this embodiment, since a plurality of venting holes H are formed in one side surface, that venting gas may be discharged smoothly and quickly.

In particular, in this configuration, the discharge hole O may be configured to open upward. Also, the filter unit 400 may be mounted at the discharge hole O. In this case, at least a part of the filter unit 400 may be securely prevented from escaping toward the discharge hole. Moreover, in an embodiment in which carbon dioxide and/or water is generated from the filter unit 400, the generated carbon dioxide or water may stay in the inner space of the venting unit 300 without flowing out toward the discharge hole O. Therefore, the fire extinguishing effect of carbon dioxide or water may be further improved.

As shown in FIG. 1 and the like, when the venting hole H is formed in the side surface of the module case 200, the venting hole H may be formed to be elongated in a vertical direction (Z-axis direction). According to this embodiment, the inflow and outflow of gas through the venting hole H may be made more smoothly and quickly. In addition, according to this embodiment, different types of gases or substances may flow in and out through the venting hole H.

Moreover, in this embodiment, the inflow and outflow of gas or liquid may be performed together in opposite directions. For example, in an embodiment in which fire extinguishing substances such as carbon dioxide or water are generated by the filter unit 400, the venting gas may be discharged from the module case 200 toward the venting unit 300, and the fire extinguishing substance may be introduced from the venting unit 300 into the module case 200. In particular, high-temperature venting gas may be discharged toward the venting unit 300 from the upper portion of the venting hole H, and fire extinguishing substances such as carbon dioxide or water may be introduced into the module case 200 through the lower portion of the venting hole H.

According to this embodiment of the present disclosure, both the external emission of the venting gas and the internal introduction of the fire extinguishing material may be performed quickly in a situation such as thermal runaway. Therefore, in this case, safety may be further improved when thermal runaway occurs in the battery module.

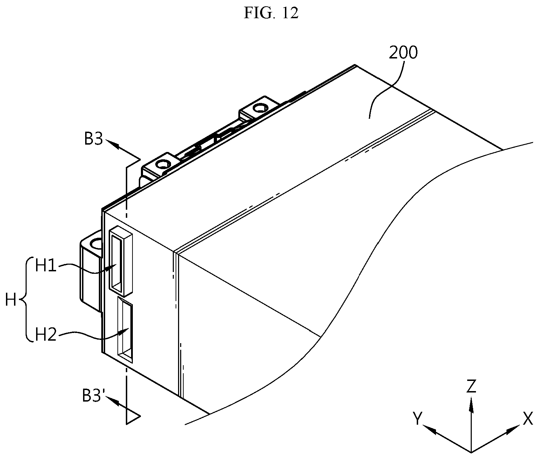

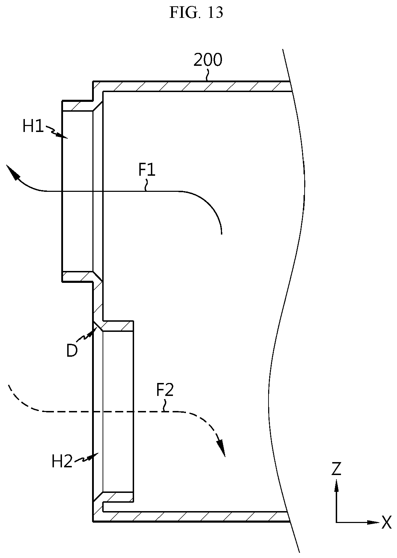

FIG. 12 is a perspective view schematically showing a partial configuration of a battery module according to still another embodiment of the present disclosure. Also, FIG. 13 is a cross-sectional view, taken along line B3-B3' of FIG. 12. However, in the configurations of FIGS. 12 and 13, only the module case 200 of the battery module is shown for convenience of explanation.

Referring to FIGS. 12 and 13, the venting hole H may include two unit holes H1, H2 arranged in a vertical direction. That is, the upper hole H1 and the lower hole H2 may be disposed in the left surface of the module case 200 in a vertical direction.

According to this embodiment, materials of different properties or types may flow through the two unit holes H1, H2. For example, when the venting gas is generated inside the module case 200, due to high temperature characteristics, the venting gas may be discharged to the outside of the module case 200, particularly toward the venting unit 300, through the upper hole H1, as indicated by arrow F1. At this time, when carbon dioxide is generated from the filter unit 400 located inside the venting unit 300, the carbon dioxide may move to the lower side since it is heavier than the venting gas or air, may be introduced into the module case 200 through the lower hole H2 as indicated by arrow F2.

Therefore, according to this embodiment of the present disclosure, the external emission of the venting gas and the internal introduction of the fire extinguishing material may be performed more smoothly and quickly with respect to the module case 200.

Moreover, the upper hole H1 and the lower hole H2 may be configured to protrude in different directions. In particular, as shown in FIGS. 12 and 13, the upper hole H1 may protrude in the outer direction of the module case 200, and the lower hole H2 may protrude in the inner direction of the module case 200. At this time, the inlets of the unit holes H1, H2 may be formed in a chamfered shape, as indicated by D3 in FIG. 13. That is, an inner end of the upper hole H1 may be formed in a chamfered shape, and an outer end of the lower hole H2 may be formed in a chamfered shape.

According to this embodiment, the flow in the upper hole H1 and the lower hole H2 in opposite directions may be more smoothly induced. That is, since the upper hole H1 is formed to protrude outward and has an inner inlet in a chamfered shape, the flow of gas from the inside to the outside of the module case 200 may be more easily performed as indicated by arrow F1. Meanwhile, since the lower hole H2 is formed to protrude inward and has an outer inlet in a chamfered shape, the flow of gas from the outside to the inside of the module case 200 may be more easily performed, as indicated by arrow F2.

Therefore, in this case, the external emission of the venting gas and the internal introduction of the fire extinguishing material may be performed more smoothly.

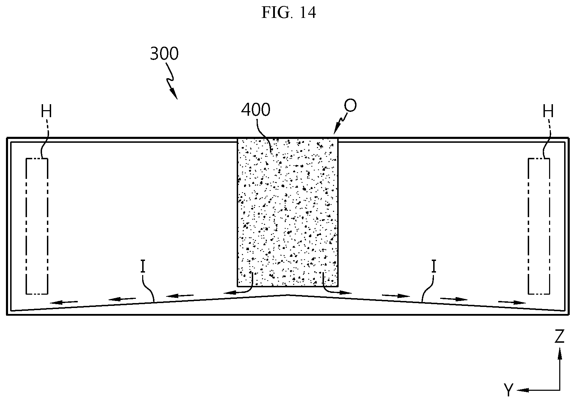

FIG. 14 is a perspective view schematically showing the configuration of a battery module according to still another embodiment of the present disclosure. In particular, only the venting unit 300 and the filter unit 400 are shown in FIG. 14. However, for convenience of explanation, a portion where the venting hole H of the module case 200 is located in a state where the venting unit 300 is mounted to the module case 200 is shown as a dotted line.

Referring to FIG. 14, the venting unit 300 may have an inclined surface formed on the bottom, as indicated by I. In particular, the inclined surface I may be configured to gradually lower in a direction from the discharge hole O toward the venting hole H. For example, as shown in FIG. 14, when the discharge hole O is located at the center and the venting hole H is located at both ends in the Y-axis direction, the bottom of the venting unit 300 may be formed to be inclined such that its height gradually decreases toward both ends.

According to this embodiment of the present disclosure, when a fire extinguishing substance such as carbon dioxide or water is generated by the filter unit 400, the fire extinguishing substance may easily move toward the venting hole H along the inclined surface I of the venting unit 300, as indicated by an arrow. Therefore, the fire extinguishing material is not discharged toward the discharge hole O but is well located in the inner space of the venting unit 300, so as to be easily injected toward the venting hole H. Therefore, the fire extinguishing effect by the fire extinguishing material may be further improved.

Also, according to this embodiment, the venting gas or the like discharged through the venting hole H may easily flow upward toward the discharge hole O by the inclined surface.

The filter unit 400 may be configured to be mounted to the inner space of the venting unit 300 in a state where the venting unit 300 is attached to the outer surface of the module case 200.

For example, seeing the embodiment of FIGS. 1 to 3, in a state where the venting unit 300 is mounted to the left surface and the right surface of the module case 200, respectively, the filter unit 400 may inserted and installed into the module case 200 through the discharge hole O. In particular, the filter unit 400 may be inserted downward through the discharge hole O located at an upper portion of the venting unit 300 and disposed in the inner space of the venting unit 300. Moreover, in this case, the venting unit 300 may have a configuration for guiding insertion and mounting of the filter unit 400. For example, as described in the former embodiment, the venting unit 300 having the protrusion P of a barrier form may guide the insertion direction and mounting position of the filter unit 400. In particular, in this embodiment, a stopper may be provided at an end of the protrusion P to limit the degree of insertion of the filter unit 400 and support the filter unit 400 in an upper direction, as indicated by the portion B2' of FIG. 9.

According to this embodiment of the present disclosure, the battery module may be manufactured more easily. In particular, the venting unit 300 may be mounted to the module case 200 by welding or the like. In this case, since the venting unit 300 may be welded to the module case 200 in a state where the filter unit 400 is not inserted, it is possible to prevent the filter unit 400 from being damaged by high heat generated during welding. Also, according to this embodiment, a problem that the filter unit 400 interferes with the mounting process of the venting unit 300 may be prevented. Accordingly, the battery module may be installed more easily.

Moreover, in this embodiment, the filter unit 400 may be detachable from the venting unit 300 through the discharge hole O or the like. That is, performance of the filter unit 400 such as moisture absorption may deteriorate after a certain period of time. However, in this embodiment, the filter unit 400 may be replaced. Therefore, long-term performance of the filter unit 400 may be stably secured.

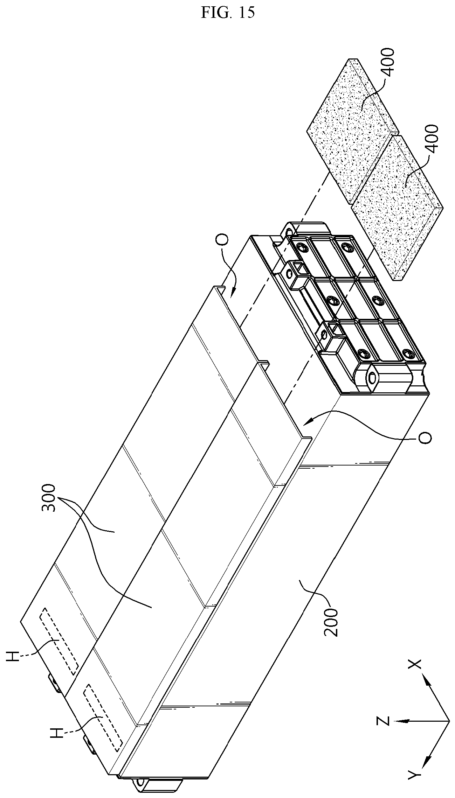

FIG. 15 is a perspective view schematically showing the configuration of a battery module according to still another embodiment of the present disclosure. FIG. 15 shows the configuration before the filter unit 400 is mounted inside the venting unit 300, for convenience of explanation.

Referring to FIG. 15, the venting hole H may be formed in an upper side of the module case 200, for example an upper plate. Also, the venting unit 300 may be attached to the outer side of the upper portion of the module case 200 to correspond to the position of the venting hole H. In particular, when a plurality of venting holes are formed, a plurality of venting units 300 may be formed corresponding to the number of such venting holes.

Also, the filter unit 400 may be inserted into the discharge hole O and located inside the venting unit 300.

In this embodiment, the fire extinguishing material input performance of the filter unit 400 into the module case 200 may be further improved. For example, when fire extinguishing substances such as carbon dioxide or water are generated from the filter unit 400 during thermal runaway of the battery module, the generated extinguishing substances may be easily introduced into the module case 200 through the venting hole H. In particular, in this case, since the venting hole H is located in the upper portion of the module case 200, the fire extinguishing material injected into the venting hole H may more smoothly extinguish fire of the cell assembly 100 located inside the module case 200.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack housing, a relay, and a current sensor. In particular, the battery pack according to the present disclosure may be configured in a form where a plurality of battery modules according to the present disclosure are accommodated inside the pack housing.

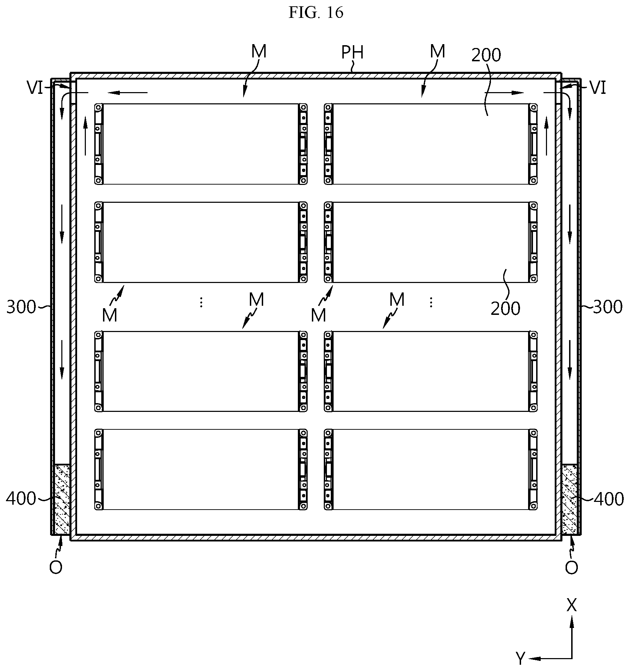

Meanwhile, in the various embodiments described above, the venting unit 300 and the filter unit 400 applied to the battery module may also be applied to the battery pack. This will be further described in more detail with reference to FIG. 16.

FIG. 16 is a diagram showing a battery pack according to another embodiment of the present disclosure, as viewed from the top. For example, FIG. 16 may be regarded as showing the internal configuration of the battery pack according to the present disclosure in a state where the upper portion of the pack housing PH is removed. This embodiment will also be described in detail based on features different from the former embodiments.

Referring to FIG. 16, a hole may be formed in at least one side of the pack housing PH in which the plurality of battery modules M are accommodated, as indicated by VI. The pack hole VI may be formed such that the inner space of the pack housing PH communicates with the outer space. In particular, the pack hole VI may function as a passage through which gas or the like existing in the inner space of the pack housing PH is discharged to the outside.

In this configuration, the pack housing PH may be equipped with the venting unit 300 according to the present disclosure described above. In particular, as shown in FIG. 16, when the pack hole VI is formed in the pack housing PH, the venting unit 300 may be attached to a portion where the pack hole VI is formed, at the outer side of the pack housing PH.

That is, the battery pack according to this embodiment of the present disclosure may include at least one battery module M, a pack housing PH configured to accommodate the at least one battery module M in an inner space thereof and having a pack hole VI formed therein, a venting unit 300 mounted to the pack housing PH, and a filter unit 400 included in the venting unit 300. The venting unit 300 may have a venting channel V so that the venting gas discharged from the pack hole VI may be introduced therein and discharged to the outside.

In this case, the venting gas generated from any battery module M may pass through the pack hole VI as indicated by an arrow in FIG. 16 and flow into the venting unit 300 located outside the pack housing PH. Then, as described above, it is possible to control venting and perform fire extinguishing and cooling by the venting unit 300 and the filter unit 400.

As in this embodiment, in the configuration in which the venting unit 300 and the filter unit 400 are mounted to the pack housing PH, the explanation for the configuration where the venting unit 300 and the filter unit 400 are mounted to the module case 200 may be applied identically or similarly. Therefore, this will not be described again.

Meanwhile, as shown in FIG. 16, the venting unit 300 may not be included in each battery module M. However, it is also possible that the venting unit 300 is separately attached to each battery module M.

In addition, in the embodiment of FIG. 16, the cell assembly 100 is accommodated in the module case 200 and provided inside the pack housing PH in a modular form. However, in the battery pack according to still another embodiment of the present disclosure, the cell assembly 100 may not be accommodated in the module case 200, but may be directly mounted to the pack housing PH in a cell-to-pack form. In this case, the battery module M described above may include only the cell assembly 100 without including the module case 200. Meanwhile, in the inner space of the pack housing PH, a control device such as a BMS (Battery Management System) and electrical components such as a relay and a current sensor may be accommodated together.

The battery module according to the present disclosure or the battery pack according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

In addition, the battery module according to the present disclosure or the battery pack according to the present disclosure may be applied to an energy storage system (ESS). That is, the energy storage system according to the present disclosure may include the battery module according to the present disclosure or the battery pack according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

### Reference Signs

100: cell assembly
200: module case
300: venting unit
310: body portion, 320: bent portion
321: top bent portion, 322: bottom bent portion, 323: front bent portion, 324: rear bent portion
400: filter unit
401: first filter, 402: second filter, 403: third filter
H: venting hole
H1: upper hole, H2: lower hole
O: discharge hole
P: protrusion
PA: projection
G: insert portion
PH: pack housing
M: battery module
VI: pack hole

## Claims

1. A battery module (M), comprising:
a cell assembly (100) having at least one battery cell;
a module case (200) configured to accommodate the cell assembly (100) in an inner space thereof and having a venting hole (H) formed therein to discharge a venting gas generated from the cell assembly (100);
a venting unit (300) located at an outer side of the module case (200) and configured so that the venting gas discharged from the venting hole (H) is introduced therein and discharged to the outside; and
a filter unit (400) at least partially located inside the venting unit (300) and configured to filter substances introduced into the venting unit (300).

2. The battery module (M) according to claim 1,
wherein the filter unit (400) contains a moisture absorbing material.

3. The battery module (M) according to claim 1,
wherein the filter unit (400) is configured to generate carbon dioxide.

4. The battery module (M) according to claim 1,
wherein the filter unit (400) is configured so that gas necessarily passes between the venting hole (H) and a discharge hole (O) of the venting unit (300).

5. The battery module (M) according to claim 1,
wherein at least one end of the venting unit (300) is configured in a bent plate form, and at least a part of an end of the bent portion (320) is attached to an outer side of the module case (200).

6. The battery module (M) according to claim 1,
wherein the venting unit (300) includes a protrusion (P) formed on an inner surface.

7. The battery module (M) according to claim 6,
wherein the protrusion (P) of the venting unit (300) is inserted into the filter unit (400).

8. The battery module (M) according to claim 6,
wherein the filter unit (400) is inserted between the protrusions (P) of the venting unit (300).

9. The battery module (M) according to claim 1,
wherein the filter unit (400) is arranged in plural along a flow direction of the venting gas in an inner space of the venting unit (300).

10. The battery module (M) according to claim 1,
wherein the module case (200) has the venting hole (H) formed at both ends of a side surface thereof, and
the venting unit (300) has a discharge hole (O) formed between the venting holes (H) at both ends.

11. The battery module (M) according to claim 1,
wherein the venting unit (300) has an inclined surface on a bottom thereof to have a height lowered in a direction toward the venting hole (H).

12. The battery module (M) according to claim 1,
wherein the filter unit (400) is configured to be mounted in an inner space of the venting unit (300) in a state where the venting unit (300) is attached to an outer surface of the module case (200).

13. A battery pack, comprising the battery module (M) according to any one of claims 1 to 12.

14. A vehicle, comprising the battery module (M) according to any one of claims 1 to 12.

## Patentansprüche

1. Batteriemodul (M), umfassend:
eine Zellenanordnung (100) mit mindestens einer Batteriezelle;
ein Modulgehäuse (200), das konfiguriert ist, um die Zellenanordnung (100) in einem Innenraum davon aufzunehmen, und ein darin ausgebildetes Entlüftungsloch (H) aufweist, um ein von der Zellenanordnung (100) erzeugtes Entlüftungsgas abzugeben;
eine Entlüftungseinheit (300), die sich an einer Außenseite des Modulgehäuses (200) befindet und so konfiguriert ist, dass das aus dem Entlüftungsloch (H) abgegebene Entlüftungsgas darin eingeleitet und nach außen abgegeben wird; und
eine Filtereinheit (400), die sich mindestens teilweise innerhalb der Entlüftungseinheit (300) befindet und konfiguriert ist, um in die Entlüftungseinheit (300) eingeleitete Substanzen zu filtern.

2. Batteriemodul (M) nach Anspruch 1, bei dem die Filtereinheit (400) ein feuchtigkeitsabsorbierendes Material enthält.

3. Batteriemodul (M) nach Anspruch 1, bei dem die Filtereinheit (400) konfiguriert ist, um Kohlendioxid zu erzeugen.

4. Batteriemodul (M) nach Anspruch 1, bei dem die Filtereinheit (400) so konfiguriert ist, dass Gas notwendigerweise zwischen dem Entlüftungsloch (H) und einem Abgabeloch (O) der Entlüftungseinheit (300) strömt.

5. Batteriemodul (M) nach Anspruch 1, bei dem mindestens ein Ende der Entlüftungseinheit (300) in Form einer gebogenen Platte konfiguriert ist und mindestens ein Teil eines Endes des gebogenen Abschnitts (320) an einer Außenseite des Modulgehäuses (200) angebracht ist.

6. Batteriemodul (M) nach Anspruch 1, bei dem die Entlüftungseinheit (300) einen Vorsprung (P) aufweist, der an einer Innenfläche ausgebildet ist.

7. Batteriemodul (M) nach Anspruch 6, bei dem der Vorsprung (P) der Entlüftungseinheit (300) in die Filtereinheit (400) eingesetzt ist.

8. Batteriemodul (M) nach Anspruch 6, bei dem die Filtereinheit (400) zwischen die Vorsprünge (P) der Entlüftungseinheit (300) eingesetzt ist.

9. Batteriemodul (M) nach Anspruch 1, bei dem die Filtereinheit (400) mehrfach entlang einer Strömungsrichtung des Entlüftungsgases in einem Innenraum der Entlüftungseinheit (300) angeordnet ist.

10. Batteriemodul (M) nach Anspruch 1, bei dem das Modulgehäuse (200) das Entlüftungsloch (H) aufweist, das an beiden Enden einer Seitenfläche davon ausgebildet ist, und die Entlüftungseinheit (300) ein Abgabeloch (O) aufweist, das zwischen den Entlüftungslöchern (H) an beiden Enden ausgebildet ist.

11. Batteriemodul (M) nach Anspruch 1, bei dem die Entlüftungseinheit (300) eine geneigte Fläche an einem Boden davon aufweist, um eine Höhe aufzuweisen, die in einer Richtung zu dem Entlüftungsloch (H) hin abgesenkt ist.

12. Batteriemodul (M) nach Anspruch 1, bei dem die Filtereinheit (400) konfiguriert ist, um in einem Innenraum der Entlüftungseinheit (300) in einem Zustand montiert zu werden, in dem die Entlüftungseinheit (300) an einer Außenfläche des Modulgehäuses (200) angebracht ist.

13. Batteriepack, umfassend das Batteriemodul (M) nach einem der Ansprüche 1 bis 12.

14. Fahrzeug, umfassend das Batteriemodul (M) nach einem der Ansprüche 1 bis 12.

## Revendications

1. Module de batterie (M) comprenant :
un ensemble de cellules (100) possédant au moins une cellule de batterie ;
un boîtier de module (200) configuré pour recevoir l'ensemble de cellules (100) dans un espace intérieur de celui-ci, et possédant un orifice de mise à l'air (H) formé à l'intérieur pour évacuer un gaz de purge dégagé par l'ensemble de cellules (100) ;
un dispositif de purge (300) situé sur un côté extérieur du boîtier de module (200), et configuré de sorte que le gaz de purge évacué par l'orifice de mise à l'air (H) soit introduit dedans et évacué à l'extérieur ; et
un élément filtrant (400) situé au moins partiellement à l'intérieur du dispositif de purge (300), et configuré pour filtrer des substances introduites dans le dispositif de purge (300).

2. Module de batterie (M) selon la revendication 1,
l'élément filtrant (400) contenant une matière absorbant l'humidité.

3. Module de batterie (M) selon la revendication 1,
l'élément filtrant (400) étant configuré pour produire du gaz carbonique.

4. Module de batterie (M) selon la revendication 1,
l'élément filtrant (400) étant configuré de sorte que le gaz passe nécessairement entre l'orifice de mise à l'air (H) et un orifice d'évacuation (O) du dispositif de purge (300).

5. Module de batterie (M) selon la revendication 1,
au moins un bout du dispositif de purge (300) étant configuré sous forme d'une plaque incurvée, et au moins une partie d'un bout de la partie incurvée (320) étant fixé sur un côté extérieur du module de boîtier (200).

6. Module de batterie (M) selon la revendication 1,
le dispositif de purge (300) comprenant une saillie (P) agencée sur une surface intérieure.

7. Module de batterie (M) selon la revendication 6,
la saillie (P) du dispositif de purge (300) étant insérée dans l'élément filtrant (400).

8. Module de batterie (M) selon la revendication 6,
l'élément filtrant (400) étant inséré entre les saillies (P) du dispositif de purge (300).

9. Module de batterie (M) selon la revendication 1,
l'élément filtrant (400) comportant une pluralité de filtres agencés dans le sens du flux du gaz de purge dans un espace intérieur du dispositif de purge (300).

10. Module de batterie (M) selon la revendication 1,
le boîtier du module (200) possédant l'orifice de mise à l'air (H) réalisé aux deux bouts d'une surface latérale de celui-ci, et
le dispositif de purge (300) possédant un orifice d'évacuation (O) agencé entre les orifices de mise à l'air (H) aux deux bouts.

11. Module de batterie (M) selon la revendication 1,
le dispositif de purge (300) possédant une surface inclinée sur un fond de celui-ci, afin de permettre l'abaissement de sa hauteur en direction de l'orifice de mise à l'air (H).

12. Module de batterie (M) selon la revendication 1,
l'élément filtrant (400) étant configuré pour être monté dans un espace intérieur du dispositif de purge (300) dans un état où le dispositif de purge (300) est fixé sur une surface extérieure du boîtier du module (200).

13. Bloc-batterie comprenant le module de batterie (M) selon une quelconque des revendications 1 à 12.

14. Véhicule comprenant le module de batterie (M) selon une quelconque des revendications 1 à 12.
